# EUROPEAN PATENT APPLICATION

(11) **EP 4 823 031 A1**
(43) Date of publication of application: **14.10.2026**
(21) Application number: 25169902.1
(22) Date of filing: 10.04.2025
(51) Int. Cl.: H04L 9/00, H04L 9/30

(54) **METHOD FOR NOISE REDUCTION IN A CIPHERTEXT**

(71) Applicant: Belfort Labs BV, 3000 Leuven (BE)
(72) Inventor: The designation of the inventor has not yet been filed
(74) Representative: Winger

(57) **Abstract**

The present invention relates to a method for reducing noise generated in a ciphertext used in a homomorphic encryption scheme. The ciphertext comprises a mask and a body and encrypting a message using a secret, said mask, said body, and said secret each being represented by one or more elements. The method comprises:
- performing one or more operations on said ciphertext, thereby introducing an approximation error for said one or more elements of at least said mask of said ciphertext,
- determining for one or more of said elements and/or said approximation errors a compensation based on said secret or a distribution used to generate said secret,
- reducing said noise by applying said compensation to said one or more elements.

## Description

### Field of the invention

The present invention is generally related to the field of cryptography. More in particular, the invention relates to techniques for reducing noise in ciphertexts.

### Background of the invention

Machine Learning (ML), driven by the availability of an abundance of data, has seen rapid advances in recent years, leading to new applications ranging from autonomous driving to medical diagnosis. In many applications, ML models are developed by one party, who makes them available to users as a cloud service. In such a context of cloud computing, for example, users run a certain privacy risk when uploading raw data to untrusted cloud servers. Therefore, it is required that sufficient security be provided to protect the users' data. A promising new technology that has emerged in the field of data security is Fully Homomorphic Encryption (FHE), which allows performing homomorphic computations on encrypted data (ciphertext) without revealing further information about that data. In other words, it is not required to first decrypt the data. So, a client encrypts data with FHE before sending it to the cloud. The cloud service then computes an FHE program on the encrypted data without obtaining any information about the input and sends the (still encrypted) result back to the client. Only the client can finally decrypt and obtain the result. Methods to perform FHE have been improved over the years up to the point that practical application has become possible.

The utility of FHE comes at a performance price, which can sometimes be prohibitive for time-critical applications. However, recent advances in software and hardware implementation of the underlying FHE algorithms show promising performance results, encouraging practitioners to start including FHE in production.

FHE introduces noise in ciphertexts for security and/or efficiency reasons. This noise typically grows during operations, and if this noise surpasses a certain threshold, correct decryption is no longer guaranteed. The noise can be reset to a minimal level through a refreshing procedure called bootstrapping. This expensive procedure is generally the main bottleneck of FHE computations. In some variants of FHE, one can additionally apply a lookup table on the input data during the bootstrapping at low to no cost in a procedure called programmable or functional bootstrapping.

FHE schemes typically define linear operations such as addition and multiplication with an unencrypted integer. On top of these linear operations, they define a bootstrap operation which refreshes the noise of a ciphertext. An overview of an example bootstrap algorithm is given below, based on the TFHE scheme described in the paper *"*TFHE: Fast Fully Homomorphic Encryption Over the Torus" (I. Chillotti et al., J.Cryptol. 33, 34-91, 2020). This popular third-generation FHE scheme supports non-linear operations and specializes in fast computation on small ciphertexts. Other relevant FHE schemes are for example the FHEW scheme as described in *"*FHEW: Bootstrapping homomorphic encryption in less than a second" (L. Ducas et al., Eurocrypt, pp. 617-640, 2015); the FINAL scheme as described in *"*FINAL: Faster FHE instantiated with NTRU and LWE" (C. Bonte et al., Asiacrypt, pp.188-2015, 2022); the BGV scheme as described in *"*(Leveled) fully homomorphic encryption without bootstrapping" (Z. Brakerski et al., ACM conference on Innovations in Theoretical Computer Science, pp. 309-3025, 2012); BFV as described in *"*Somewhat practical fully homomorphic encryption" (J. Fan and F. Vercauteren, IACR cryptology eprint archive, 2012) and CKKS as described in *"*Homomorphic Encryption for Arithmetic of Approximate Numbers" (J. H. Cheon et al., Asiacrypt, pp.409-437, 2017). These papers provide a more detailed description of these FHE schemes and are incorporated in this disclosure by reference.

Some more detailed information on the Torus Fully Homomorphic Encryption (TFHE) scheme and its working is provided. Torus Fully Homomorphic Encryption is a homomorphic encryption scheme based on the Learning With Errors (LWE) problem. This problem requires that ciphertexts have a sufficiently high LWE dimension and include a small noise term. This noise increases throughout operations and leads to decryption errors when it grows too large. The noise can be reset to a low value by bootstrapping. The LWE dimension and the noise variance on the input ciphertexts are both parameters that determine the trade-off between security, computational complexity and the error probability of TFHE.

TFHE operates on elements that are defined over the real Torus $T = ℝ / ℤ$, i.e., the set [0, 1) of real numbers modulo 1. In practice, Torus elements are often discretized as 32-bit or 64-bit integers. In this case, the elements are discretized onto ${q}^{- 1} ℤ / ℤ$, where *q* = 2³² or *q* = 2⁶⁴, respectively. Its representatives are {0, 1/q, ..., q-1/q} and operate modulo 1. However, implementations often multiply by *q,* to work over the integers modulo q.

A TFHE ciphertext can be constructed by combining three elements: a secret vector *s* with *n* coefficients following a uniform binary distribution, a public vector *a* (also referred to as a mask) sampled from a uniform distribution, and a small error e. A message m can be encrypted as a tuple: *c* $= \left(a, b=a⋅s+e+m\right) ∈ {T}^{n} \times T$. Using the secret vector *s*, one can decrypt the ciphertext back into (a noisy version of) the message m by computing *b* - *a* · *s* = m + *e*. As *a* and *b* are defined over the real Torus 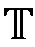 , this type of ciphertext is called a Torus LWE (TLWE) ciphertext.

The encryption is based on the Learning With Errors (LWE) hard problem. Variants of this encryption include a version where *a* and *b* are polynomials (Ring Learning With Errors - RLWE) or vectors of polynomials (Module Learning With Errors (MLWE)). Sometimes, these problems are generalized under the term Generalized Learning With Errors (GLWE).

TFHE additionally describes two variant ciphertexts. First, there is a generalized version (TGLWE) based on the GLWE problem, where *e* and m are polynomials in ${T}_{N} \left[X\right] =$ $T \left[X\right] / \left({X}^{N}+1\right)$ (with N the order of the polynomials), and where *a* and *s* are vectors of polynomials of the form ${T}_{N} {\left[X\right]}^{k}$. The TGLWE ciphertext is then similarly formed as a tuple: *c* = (*a, b = a · s + e +* $\left.m\right) ∈ {T}_{N} {\left[X\right]}^{k + 1}$. The second variant is a generalized version of a GSW (Gentry, Sahai and Waters) ciphertext (TGGSW), which is essentially a matrix where each row is a TGLWE ciphertext: *c* ∈ ${T}_{N} {\left[X\right]}^{\left(k+1\right) l \times \left(k+1\right)}$. The motivation for defining TGLWE and TGGSW ciphertexts is that they permit a homomorphic multiplication : *TGLWE*(*m*₁) 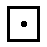 *TGGSW*(*m*₂) = *TGLWE*(*m*₁ · *m*₂) known as the External Product ( 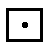 ). This external product defines a multiplication between a Torus-General-LWE ciphertext and a Torus-General-GSW ciphertext and results in a new Torus-General-LWE ciphertext. First, it decomposes each of the polynomials in the TGLWE ciphertext into *l* polynomials with coefficients of β values (i.e., log₂(β) bits), an operation termed gadget decomposition. Then, the decomposed TGLWE ciphertext and the TGGSW ciphertext are multiplied.

More specifically, the gadget decomposition splits the coefficients aᵢ of the input vector a into smaller blocks aᵢ^{(j)} (i = 0, ..., kN-1 (for key switching decomposition, see below) or i = 0, ..., k-1 (for blind rotation decomposition, see below) and j = 1, ..., l) that together represent the original aᵢ, apart from a possible approximation error uᵢ. The aᵢ^{(j)} are then the input to the multiplication operation. More specifically, the original aᵢ can be reconstructed as: ${a}_{i} = {a}_{i}^{\left(1\right)} ⋅ \frac{1}{β} + {a}_{i}^{\left(2\right)} ⋅ \frac{1}{{β}^{2}} + ⋯ + {a}_{i}^{\left(l\right)} ⋅ \frac{1}{{β}^{l}} + {u}_{i}$ The uᵢ represents the error made due to approximations. If the inputs are vectors of polynomials, the gadget decomposition is performed on the polynomials coefficient-wise. A similar decomposition can be performed for the b part of the ciphertext as: $b = {b}^{\left(1\right)} ⋅ \frac{1}{β} + {b}^{\left(2\right)} ⋅ \frac{1}{{β}^{2}} + ⋯ + {b}^{\left(l\right)} ⋅ \frac{1}{{β}^{l}} + {u}_{b}$ After the gadget decomposition, the decomposed ciphertext is then flattened to a one-dimensional vector of polynomials which is used as an input to the multiplication. Next, the decomposed TGLWE ciphertext and TGGSW are multiplied to form the product of a (*k +* 1)*l*-vector times a (*k* + 1)*l* × (*k* + 1)-matrix (the generalized version of GSW ciphertext). The elements of the vector and the matrix are polynomials in ${T}_{N} \left[X\right]$ : $\begin{matrix}\left({A}_{0} {A}_{1} … {A}_{k - 1} B\right) = \\ \left({a}_{0}^{\left(1\right)} … {a}_{0}^{\left(l\right)} {a}_{1}^{\left(1\right)} … {a}_{1}^{\left(l\right)} ⋯ {b}^{\left(1\right)} … {b}^{\left(l\right)}\right) ⋅ \left(\begin{matrix}{B}_{0 , 0} & … & {B}_{0 , k} \\ & ⋱ & \\ {B}_{\left(k+1\right) l - 1 , 0} & … & {B}_{\left(k+1\right) l - 1 , k}\end{matrix}\right)\end{matrix}$ (1) with aᵢ^{(j)} and b^{(j)} the coefficients of the expression above. The *B*_{i,j} denote the coefficients of the bootstrapping key.
The output of dimension *1×(k+1)* is again a TGLWE ciphertext encrypting m₁ · m₂. The variables k and *l* are cryptographic FHE parameters. In some descriptions, the coefficients of the ciphertexts are not real numbers modulo 1, but integers modulo q. In this case the ciphertexts are typically referred to as GLWE or GGSW ciphertexts, removing the reference T to the Torus.

While some noise is introduced for security reasons, ciphertext approximations during bootstrapping increase the noise variance significantly. This unwanted noise is introduced as rounding errors during modulus switching, and during decomposition in both key switching and blind rotation, which are all subroutines of a bootstrapping operation. Bootstrapping aims to reduce the noise in the ciphertext, which can be achieved by computing a decryption. However, for security reasons bootstrapping decrypts the ciphertext homomorphically inside the encrypted domain. This means one wants to homomorphically compute *b - a · s = e* + m, and in case of TFHE, one typically performs programmable bootstrapping (PBS), where additionally a function *f*(m) is computed: *F* = ${\sum }_{i = 0}^{N - 1} f \left(i\right) ⋅ {X}^{i} ∈ {T}_{N} \left[X\right]$ encodes *N* relevant values of the function *f*. This polynomial then undergoes a blind rotation over *b - a* · *s* positions, referred to as slots, by calculating *F · X*^{*-*(*b - a·s*)}*,* after which the output to the function can be found on the first position of the resulting polynomial. All calculations should be performed without revealing the value of *s.* This can be achieved by first rewriting the above expression as follows : $F ⋅ {X}^{- \left(b-a⋅s\right)} = F ⋅ {X}^{- b} ⋅ {\prod }_{i = 1}^{n} {X}^{{a}_{i} ⋅ {s}_{i}} .$ (2) This expression can be calculated iteratively. Starting with the polynomial *ACC = F · X^{-b},* one iteratively calculates for *i* = *1,* ..., *n:* $ACC ← ACC ⋅ {X}^{{a}_{i} ⋅ {s}_{i}} ,$ (3) which can further be rewritten, using the fact that *sᵢ* is either zero or one, to $ACC ← \left(ACC⋅{X}^{{a}_{i}}-ACC\right) ⋅ {s}_{i} + ACC .$ (4) As the secret *sᵢ* cannot be revealed, the *sᵢ* value is encoded in a TGGSW ciphertext *BK*ᵢ, and the ACC value encoded in a TGLWE ciphertext, after which the expression becomes : $ACC ← \left(ACC⋅{X}^{{a}_{i}}-ACC\right) ⊡ {BK}_{i} + ACC ,$ (5) Using the homomorphic multiplication 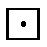 the operation expressed in equation (5) homomorphically multiplexes on the secret value *sᵢ* and is known as the Controlled MUX (CMUX) operation.

Collectively, the different TGGSW ciphertexts *BK*₁, *..., BKₙ,* each encrypting one secret coefficient *s*₁, ..., *sₙ,* are known as the bootstrapping key elements (also called bootstrapping key coefficients), which together form a bootstrapping key. The result of the operations described above is a TGLWE accumulator *ACC,* which is "blindly" rotated with a secret amount of *b - a* · *s* slots, from which the output TLWE ciphertext *cₒᵤₜ* can be straightforwardly extracted. A high-level overview of the computations performed during the blind rotation procedure of the PBS in a TFHE scheme is given in the algorithm shown below.

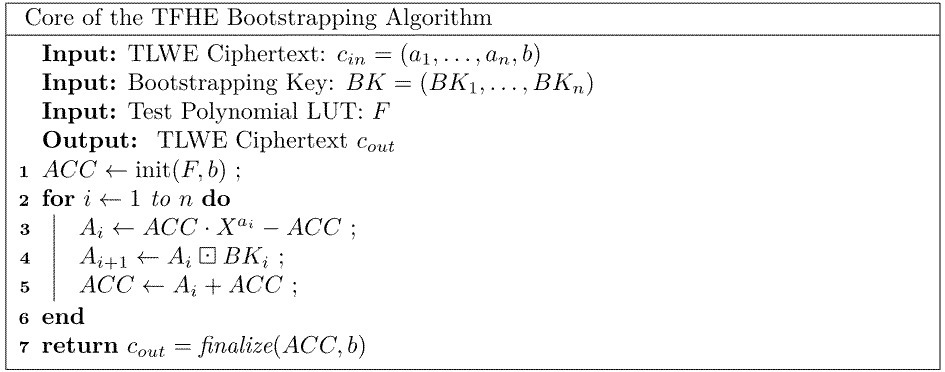

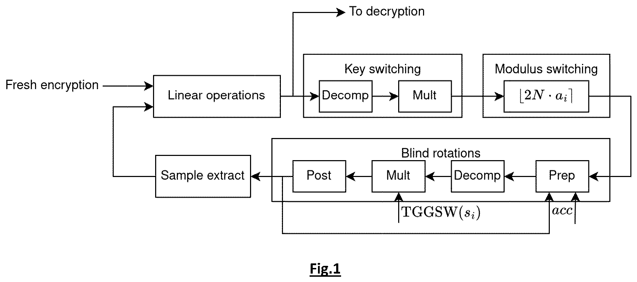

The above procedure depicts the core subroutine of the bootstrap operation, namely the blind rotation. This is one of the parts of a full bootstrap cycle of the TFHE scheme, which in general roughly consists of the following five phases: linear operations, key switching, modulus switching, blind rotations and sample extraction. Fig.1 provides an illustration. Note that in some instantiations one or more of these phases could be skipped, and/or performed in another order.

When the noise limit is approached after the linear operations on a TLWE ciphertext, a key switching operation is first performed in the bootstrapping procedure. Key switching changes a ciphertext (a, b = Σ aᵢsᵢ + m + e) under encryption key s, to a ciphertext (A, B = Σ AᵢSᵢ + m + E) encrypting the same message under a different encryption key S. The aim is to calculate b - Σ aᵢsᵢ, but with the important detail that all sᵢ are encrypted as Key Switching Keys KSKᵢ under the encryption key S. This means that one has to calculate b - ∑ aᵢ 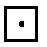 KSKᵢ with 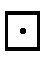 an encrypted multiplication operation. As in the blind rotation operation, one first performs gadget decomposition on the input ciphertext, after which the real multiplication is calculated. For each of the elements of the mask aᵢ is decomposed into lₖₛ coefficients of βₖₛ values (i.e., log₂(βₖₛ) bits), where the subscript ks means key switching, the gadget decomposition can be written as : ${a}_{i} = {a}_{i}^{\left(1\right)} ⋅ \frac{1}{{β}_{ks}} + {a}_{i}^{\left(2\right)} ⋅ \frac{1}{{β}_{ks}^{2}} + ⋯ + {a}_{i}^{\left({l}_{ks}\right)} ⋅ \frac{1}{{β}_{ks}^{{l}_{ks}}} + {u}_{i} .$ (6) where uᵢ denotes the rounding error. In the second step, the output ciphertext is calculated as *b* - Σ*ᵢ aᵢ · KSKᵢ.* Every product aᵢ · KSKᵢ is a vector-matrix multiplication: $\left[{a}_{i}^{\left(1\right)} ⋯ {a}_{i}^{\left({l}_{ks}\right)}\right] \times \left[\begin{matrix}{α}_{1}^{\left(1\right)} & ⋯ & {α}_{n}^{\left(1\right)} & {s}_{i} ⋅ \frac{1}{{β}_{ks}^{1}} + {\sum }_{j} {α}_{j}^{\left(1\right)} ⋅ {S}_{j} + {e}_{0}^{\left(1\right)} \\ ⋮ & ⋱ & ⋮ & ⋮ \\ {α}_{1}^{\left({l}_{ks}\right)} & ⋯ & {α}_{n}^{\left({l}_{ks}\right)} & {s}_{i} ⋅ \frac{1}{{β}_{ks}^{{l}_{ks}}} + {\sum }_{j} {α}_{j}^{\left({l}_{ks}\right)} ⋅ {S}_{j} + {e}_{0}^{\left({l}_{ks}\right)}\end{matrix}\right] .$ (7)

Modulus switching is the next step when performing bootstrapping. A modulus switch operation changes the modulus of an LWE ciphertext, by performing a multiplication with the quotient of both moduli and rounding the result. In this case, ${{a}_{i}}^{˜} = \left⌊2N⋅{a}_{i}\right⌋$ and ${b}^{˜} = \left⌊2N⋅b\right⌋$ are computed to represent all elements of the ciphertext with integers modulo 2N, instead of torus elements modulo 1. When implementations multiply all elements with *q* to work over the integers modulo q, this factor q must be removed by computing ${{a}_{ι}}^{˜} = \left⌊\frac{2 N ⋅ {a}_{i}}{q}\right⌋$ and ${b}^{˜} = \left⌊\frac{2 N ⋅ b}{q}\right⌋$.

Sample extraction is the final operation that completes bootstrapping. The sample extraction block in Fig.1 changes the encryption from an MLWE or RLWE encryption to an LWE encryption. This is a relatively straightforward operation that involves negating and reordering the correct terms and generally does not increase the noise. The linear operations can include additions on ciphertexts, or multiplications with a small, unencrypted integer.

Reducing the noise introduced during calculations can lead to less frequent bootstrap operations being required, a lower error probability, or more efficient parameters that can be chosen for the encryption scheme.
A first type of noise is due to errors introduced to obtain security. FHE is typically built upon lattice-based cryptography which introduces noise for security reasons. Example security problems upon which FHE is built, are the already mentioned Learning With Errors (LWE) or its variants, and NTRU. This type of noise is introduced during encryption, blind rotation, and key switching. For example, for FHE, the noise introduced during blind rotation and key switching can be described with the formulas below: $\begin{matrix}{σ}_{br - noise}^{2} = {σ}_{glwe}^{2} ⋅ \left(\frac{{β}_{br}^{2} + 2}{12}\right) ⋅ {l}_{br} ⋅ \left(k+1\right) ⋅ N ⋅ n \\ {σ}_{ks - noise}^{2} = {σ}_{lwe}^{2} ⋅ \left(\frac{{β}_{ks}^{2} + 2}{12}\right) ⋅ {l}_{ks} ⋅ k ⋅ N\end{matrix}$ (8) In these expressions, lₖₛ and βₖₛ, and l_{br} and β_{br} are the parameters for the gadget decomposition of the key switch (ks) and blind rotation (br), respectively. σ_{lwe} and σ_{glwe} represent the standard deviation of the LWE and GLWE security error terms, while N is the polynomial size, k the number of polynomials in a vector, and n the size of the LWE vector. When computing linear operations on ciphertexts, this noise is typically enlarged.

A second type of noise arises due to approximations, where an error is introduced by compressing a ciphertext or dropping part of a ciphertext. This approximation noise starts in various operations: for example during modulus switch and gadget decompositions, and it propagates or even grows through subsequent operations. The total effect of these noise contributions through the bootstrap cycle can be calculated as: $\begin{matrix}{σ}_{ms}^{2} = \frac{1}{12 ⋅ {\left(2⋅N\right)}^{2}} ⋅ \left(n⋅\left({σ}_{s}^{2}+{μ}_{s}^{2}\right)+1\right) \\ {σ}_{br - decomp}^{2} = \frac{1}{12 ⋅ {β}_{br}^{2 ⋅ {l}_{br}}} ⋅ \left(k⋅N⋅\left({σ}_{s}^{2}+{μ}_{s}^{2}\right)+1\right) ⋅ \left({σ}_{m}^{2}+{μ}_{m}^{2}\right) ⋅ n \\ {σ}_{ks - decomp}^{2} = \frac{1}{12 ⋅ {β}_{ks}^{2 ⋅ {l}_{ks}}} ⋅ \left({σ}_{s}^{2}+{μ}_{s}^{2}\right) ⋅ \left(k⋅N\right)\end{matrix}$ (9) The additional parameters σₛ and µₛ represent the standard deviation and mean of the distribution of the secret coefficients, while the σₘ and µₘ represent the standard deviation and mean of the distribution of the message coefficients in the bootstrapping key. The factors 1/12(2N)² and 1/12β^{2l} describe the variance of the approximation noise.

The importance of noise reduction can be seen from other works in this area. The paper *"*Improved Programmable Bootstrapping with Larger Precision and Efficient Arithmetic Circuits for TFHE" (I. Chillotti et al., Asiacrypt, pp. 670-699, 2021) developed a tight noise analysis to describe the exact contribution to the overall error of all individual noise sources. Their analysis does not include further optimizations to reduce the noise. Patent application EP4488821 A1 describes a new method to reduce the noise. The idea behind the proposed approach is to use bootstrap operations to compute a ciphertext that contains the noise, or an approximation of the noise. This approximation of the noise can then be subtracted from the original ciphertext, thus providing noise reduction to the ciphertext. The paper *"*Drifting Towards Better Error Probabilities in Fully Homomorphic Encryption Schemes" (O. Bernard et al., IACR eprint, 2024) develops a noise reduction mechanism by adding ciphertexts with message zero to the original ciphertext, with the goal of finding a combined ciphertext with low noise.

Hence, there is room for improving operations like bootstrapping by looking for ways to achieve a reduction of the noise.

### Summary of the invention

It is an object of embodiments of the present invention to provide for a method for reducing the noise generated when performing one or more operations on a ciphertext in a homomorphic encryption scheme.

The above objective is accomplished by the solution according to the present invention.

In a first aspect the invention relates to a method for reducing noise generated in a ciphertext used in a homomorphic encryption scheme, said ciphertext comprising a mask and a body and encrypting a message using a secret, said mask, said body, and said secret each being represented by one or more elements. The method comprises:
- performing one or more operations on said ciphertext, thereby introducing an approximation error for said one or more elements of at least said mask of said ciphertext,
- determining for one or more of said elements and/or said approximation errors a compensation based on said secret or a distribution used to generate said secret,
- reducing said noise by applying said compensation to said one or more elements.

The proposed solution indeed allows for a reduction of the noise introduced when during one or more operations on the ciphertext one or more elements representing the ciphertext have to be approximated. The compensation for the approximation errors takes in preferred embodiments the form of an approximation term for each element derived from the secret and the distribution employed to generate the secret. In advantageous embodiments the mean of the secret is used in the approximation term. Mathematical details are provided later in the description. In other preferred embodiments the compensation for the approximation errors is implemented by performing additional blind rotations based on a function of one or more of the elements. Also for these embodiments more details are provided later in the description. The one or more elements representing the mask, body and secret correspond to the coefficients in some cases, and in other cases to polynomials that in turn contain coefficients.

In some embodiments the compensation is calculated as a function of one or more of the elements and/or the approximation errors.

In embodiments of the invention the approximation errors for the one or more elements are combined into an approximation error term, and a function of the approximation error term is added to or subtracted from the ciphertext or a future ciphertext derived from the ciphertext.

Advantageously the approximation error term is multiplied with the mean of the secret, and the multiplication result is added to or subtracted from the ciphertext or a future ciphertext derived from the ciphertext.

In one embodiment the approximation error is due to a modulus switching operation.

In one embodiment the approximation error is due to a gadget decomposition operation.

In another embodiment the approximation error is due to a blind rotation operation.

In some embodiments various combinations of the above-mentioned operations can be implemented according to the needs of the specific case at hand.

Advantageously, the one or more operations are part of a bootstrapping procedure.

In a preferred embodiment the method of the invention comprises performing a bootstrap key unrolling technique, wherein a plurality of the elements is combined and the combined elements are approximated, and wherein the compensation also depends on whether the approximations of the combined elements deviate from respective combinations of approximations of the individual elements making up the combined elements.

In preferred embodiments the compensation comprises performing one or more additional blind rotations based on an encryption of a function of multiple elements of the secret and the one or more additional blind rotations compensate the total rotated slots to equal a multiple of a targeted integer, allowing up to the integer number of function evaluations to be performed.

In another embodiment the reduced noise level is exploited to adapt at least one parameter of the homomorphic encryption scheme.

For purposes of summarizing the invention and the advantages achieved over the prior art, certain objects and advantages of the invention have been described herein above. Of course, it is to be understood that not necessarily all such objects or advantages may be achieved in accordance with any particular embodiment of the invention. Thus, for example, those skilled in the art will recognize that the invention may be embodied or carried out in a manner that achieves or optimizes one advantage or group of advantages as taught herein without necessarily achieving other objects or advantages as may be taught or suggested herein.

The above and other aspects of the invention will be apparent from and elucidated with reference to the embodiment(s) described hereinafter.

### Brief description of the drawings

The invention will now be described further, by way of example, with reference to the accompanying drawings, wherein like reference numerals refer to like elements in the various figures.

Fig.1 illustrates the various phases of a bootstrapping operation.

### Detailed description of illustrative embodiments

The present invention will be described with respect to particular embodiments and with reference to certain drawings but the invention is not limited thereto but only by the claims.

Furthermore, the terms first, second and the like in the description and in the claims, are used for distinguishing between similar elements and not necessarily for describing a sequence, either temporally, spatially, in ranking or in any other manner. It is to be understood that the terms so used are interchangeable under appropriate circumstances and that the embodiments of the invention described herein are capable of operation in other sequences than described or illustrated herein.

It is to be noticed that the term "comprising", used in the claims, should not be interpreted as being restricted to the means listed thereafter; it does not exclude other elements or steps. It is thus to be interpreted as specifying the presence of the stated features, integers, steps or components as referred to, but does not preclude the presence or addition of one or more other features, integers, steps or components, or groups thereof. Thus, the scope of the expression "a device comprising means A and B" should not be limited to devices consisting only of components A and B. It means that with respect to the present invention, the only relevant components of the device are A and B.

Reference throughout this specification to "one embodiment" or "an embodiment" means that a particular feature, structure or characteristic described in connection with the embodiment is included in at least one embodiment of the present invention. Thus, appearances of the phrases "in one embodiment" or "in an embodiment" in various places throughout this specification are not necessarily all referring to the same embodiment, but may. Furthermore, the particular features, structures or characteristics may be combined in any suitable manner, as would be apparent to one of ordinary skill in the art from this disclosure, in one or more embodiments.

Similarly it should be appreciated that in the description of exemplary embodiments of the invention, various features of the invention are sometimes grouped together in a single embodiment, figure, or description thereof for the purpose of streamlining the disclosure and aiding in the understanding of one or more of the various inventive aspects. This method of disclosure, however, is not to be interpreted as reflecting an intention that the claimed invention requires more features than are expressly recited in each claim. Rather, as the following claims reflect, inventive aspects lie in less than all features of a single foregoing disclosed embodiment. Thus, the claims following the detailed description are hereby expressly incorporated into this detailed description, with each claim standing on its own as a separate embodiment of this invention.

Furthermore, while some embodiments described herein include some but not other features included in other embodiments, combinations of features of different embodiments are meant to be within the scope of the invention, and form different embodiments, as would be understood by those in the art. For example, in the following claims, any of the claimed embodiments can be used in any combination.

It should be noted that the use of particular terminology when describing certain features or aspects of the invention should not be taken to imply that the terminology is being redefined herein to be restricted to include any specific characteristics of the features or aspects of the invention with which that terminology is associated.

In the description provided herein, numerous specific details are set forth. However, it is understood that embodiments of the invention may be practiced without these specific details. In other instances, well-known methods, structures and techniques have not been shown in detail in order not to obscure an understanding of this description.

The background section has made clear that reducing the noise generated is an effective way to improve the efficiency of homomorphic encryption schemes. The general idea behind the techniques according to the invention is that one can compensate or reduce noise introduced during operations that perform approximate computations, by using the ciphertext to be compressed and/or the compression noise to produce a compensation term. This compensation term can then be applied to the ciphertext to reduce the noise generated.

It was already shown in the background section that operations like, for example, modulus switching and approximate gadget decomposition introduce approximation errors into the ciphertext during bootstrapping because they compress the representation for each of the coefficients of the ciphertext. The resulting noise at the end of the bootstrap cycle is given by equations (9), and includes the mean of the secret, µₛ. In the method according to the present invention this contribution related to the mean of the secret is removed from the noise, achieving a reduction in noise variance. Next, the invention presents techniques to further reduce the approximation noise.

The main idea behind the approach proposed in this invention is the following: during bootstrapping, in operations such as modulus switching or gadget decomposition, an approximation is made for one or more coefficients, preferably each of the coefficients of the ciphertext, resulting in an approximation error uᵢ for all elements of the ciphertext (a, b=as + e + m) with e an initial error and m the message. Before the approximation, the error can be calculated as: $b - as - m = e$ (10) After the approximation one has a ciphertext (â, b̂), where aᵢ = âᵢ + uᵢ and b = b̂ + u_{b}. Decryption now gives: $\begin{matrix}\hat{b} - \hat{a} s - m = b - {u}_{b} - \sum \left({a}_{i}-{u}_{i}\right) {s}_{i} - m \\ = e - {u}_{b} + \sum {u}_{i} {s}_{i}\end{matrix}$ The approximations for the elements aᵢ of the input vector each result in an additional error during decryption equal to uᵢ · sᵢ with sᵢ ∈ {0, 1}. Note that the secret has a non-zero mean, which results in an error variance of σᵤ² · (σₛ² + µₛ²).

In this invention the goal is to reduce this error variance by eliminating the effect of the mean µₛ², hence, of a feature of the distribution used to generate the secret. One can compensate this mean by subtracting uᵢ · µₛ from b. That is, one still has a = â + u, but then first computes b_{comp} = (b - Σ uᵢ · µₛ) before approximating to b̂_{comp} with b_{comp} = b̂_{comp} + u_{b}. Note that only the mean component of the noise equation related to the error terms uᵢ is removed. As before one can decrypt to obtain the added error term: $\begin{matrix}{\hat{b}}_{comp} - \hat{a} s - m = b - \sum {u}_{i} ⋅ {μ}_{s} - {u}_{b} - \left(a-u\right) s - m \\ = e - {u}_{b} - \sum {u}_{i} ⋅ {μ}_{s} + us \\ = e - {u}_{b} + u \left(s-{μ}_{s}\right)\end{matrix}$ That is, for each coefficient aᵢ of a, the practical added noise after compensation is:${u}_{i} {s}_{i} - {u}_{i} ⋅ {μ}_{s} = {u}_{i} \left({s}_{i}-{μ}_{s}\right)$ This reduces the mean from the secret, removing it from the noise equation. The compensation used to reduce the noise in this case is obtained by applying this compensation term. It will be shown later how exactly one can subtract the term uᵢ · µₛ from b. Note that this is not limited to sᵢ ∈ {0, 1}, but extends to any distribution for s with nonzero mean.

As a first example of the approach according to the invention, more details are provided on reducing the noise during modulus switching. Looking at an LWE encryption (a, b = Σ aᵢsᵢ + $\left.m+{e}_{in}\right) ∈ {T}^{n} \times T$, the initial noise eᵢₙ can be calculated by decrypting and subtracting the message as: $b - {\sum }_{i = 1}^{n} {a}_{i} {s}_{i} - m = {e}_{in}$

Modulus switching switches a ciphertext from one modulus to another. In this example, a switch is performed from a modulus q to a smaller modulus 2N, by dividing by q/(2N) and rounding the result. After modulus switching, one has an LWE sample $\left(\left⌊2N⋅a\right⌋, \left⌊2N⋅b\right⌋\right) ∈ {{ℤ}_{2 N}}^{n} \times {ℤ}_{2 N}$. This means that $\frac{\left⌊2N⋅{a}_{i}\right⌋}{2 N} = {a}_{i} - {u}_{i}$, where uᵢ follows $U \left(\frac{- 1}{4 N}, \frac{1}{4 N}\right)$ and is the error added due to rounding. The resulting rounding noise introduced by the modulus switch, denoted eₘₛ, can be derived by decrypting the new LWE sample and subtracting the message and initial noise (m + eᵢₙ): $\begin{matrix}{e}_{ms} = \frac{\left⌊2N⋅b\right⌋}{2 N} - {\sum }_{i = 1}^{n} \frac{\left[2N⋅{a}_{i}\right]}{2 N} ⋅ {s}_{i} - m - {e}_{in} \\ = \left(b-{u}_{b}\right) - {\sum }_{i = 1}^{n} \left({a}_{i}-{u}_{i}\right) ⋅ {s}_{i} - m - {e}_{in} \\ = - {u}_{b} + {\sum }_{i = 1}^{n} {u}_{i} ⋅ {s}_{i} .\end{matrix}$ eₘₛ thus has a variance of σᵤ² · (1 + n · (σₛ ² + µₛ ²), where σᵤ ² is the variance of uᵢ, and σₛ ² and µₛ are respectively the variance and mean of the secret sᵢ.

To remove the mean value from this equation, the present invention proposes to replace the body b by 6 = b - µₛ · Σ uᵢ. With this compensation, the noise after modulus switching is: $\begin{matrix}{e}_{ms} = \frac{\left⌊2N⋅{b}_{comp}\right⌋}{2 N} - {\sum }_{i = 1}^{n} \frac{\left[2N⋅{a}_{i}\right]}{2 N} ⋅ {s}_{i} - m - {e}_{in} \\ = \left(b-{\sum }_{i = 1}^{n} {u}_{i} ⋅ {μ}_{s} - {u}_{b}\right) - {\sum }_{i = 1}^{n} \left({a}_{i}-{u}_{i}\right) ⋅ {s}_{i} - m - {e}_{in} \\ = - {u}_{b} + {\sum }_{i = 1}^{n} {u}_{i} ⋅ \left({s}_{i}-{μ}_{s}\right)\end{matrix}$ In this case, the term (sᵢ - µₛ) has zero mean, which reduces the noise to σᵤ ² · (1 + n · σₛ ²), nearly halving the noise variance.

An implementation example of the new modulus switching method is described in the algorithm below. It processes the modulus switch for each coefficient of a and accumulates the total rounding error in c. This c is then compensated by means of the compensation term just before rounding the b term.

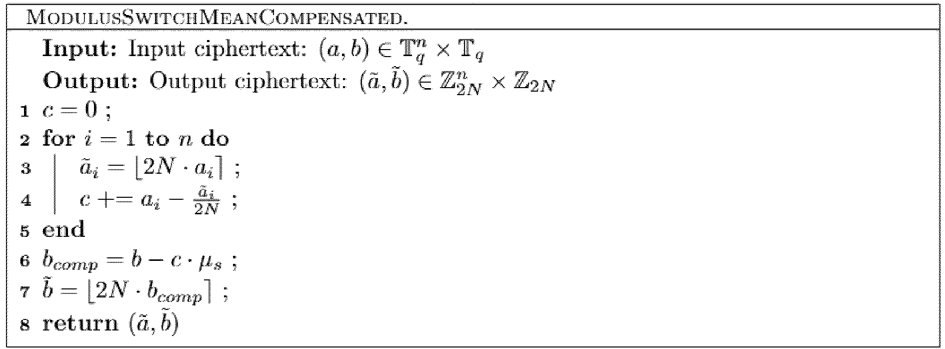

Note that this technique is also valid when starting from a non-Torus representation of the ciphertext in ${ℤ}_{q}$, where coefficients are represented with an integer between 0 and q, or any other starting and ending moduli. The proposed technique is relevant as long as an approximation error is made during the modulus switch. An implementation example of this case is given in the algorithm below.

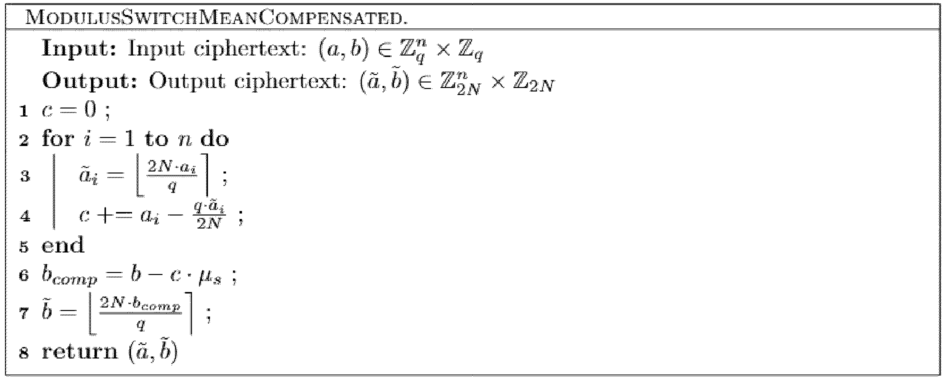

A similar approach can be adopted for the gadget decomposition during key switching. This is a technique that breaks each coefficient in one or more smaller blocks, and typically drops (possibly after rounding) some of the less significant bits or blocks of the coefficients resulting in an approximation error. The input to the key switching is an LWE encryption of m, (a, b = Σ aᵢsᵢ + m $\left.+{e}_{in}\right) ∈ {T}^{kN} \times T$. To execute key switching, first, the gadget decomposition of each aᵢ is taken by splitting each coefficient in Iₖₛ terms of size βₖₛ (i.e., log₂(βₖₛ) bits): ${a}_{i} = {a}_{i}^{\left(1\right)} ⋅ \frac{1}{{β}_{ks}} + {a}_{i}^{\left(2\right)} ⋅ \frac{1}{{β}_{ks}^{2}} + ⋯ + {a}_{i}^{\left({l}_{ks}\right)} ⋅ \frac{1}{{β}_{ks}^{{l}_{ks}}} + {U}_{i}$ where: ${a}_{i}^{\left(j\right)} follows U \left(\left〚-\frac{{β}_{ks}}{2},\frac{{β}_{ks}}{2}\right〛\right)$ ${U}_{i} follows U \left(\left〚-\frac{1}{2 {β}_{ks}^{{l}_{ks}}},\frac{1}{2 {β}_{ks}^{{l}_{ks}}}\right〛\right) .$

All aᵢ^{(j)} are smaller blocks that together represent the coefficient aᵢ and the term Uᵢ is an approximation error that introduces additional noise on the output. This noise term, eₖₛ, can be found when decrypting the recomposed ciphertext after the rounding operation: $\begin{matrix}{e}_{ks} = b - {\sum }_{i = 1}^{kN} \left({\sum }_{j = 1}^{{l}_{ks}} \left({a}_{i}^{\left(j\right)}⋅\frac{1}{{β}_{ks}^{j}}\right)\right) ⋅ {s}_{i} - m - {e}_{in} \\ = b - {\sum }_{i = 1}^{kN} \left({a}_{i}-{U}_{i}\right) ⋅ {s}_{i} - m - {e}_{in} \\ = {\sum }_{i = 1}^{kN} {s}_{i} ⋅ {U}_{i}\end{matrix}$ with the variance equal to: $kN ⋅ \frac{1}{12 {β}_{ks}^{2 {l}_{ks}}} ⋅ \left({σ}_{s}^{2}+{μ}_{s}^{2}\right) .$

Similar to the mean compensation for the modulus switching, b is adjusted based on rounding errors in the gadget decomposition. More specifically, b̂ = b - µₛ · Σ Uᵢ is used. Now, decrypting the recomposed ciphertext indicates that the noise introduced by decomposing equals: $\begin{matrix}{e}_{ks} = \hat{b} - {\sum }_{i = 1}^{kN} \left({a}_{i}-{U}_{i}\right) ⋅ {s}_{i} - m - {e}_{in} \\ = b - {μ}_{s} ⋅ {\sum }_{i = 1}^{kN} {U}_{i} - {\sum }_{i = 1}^{kN} \left({a}_{i}-{U}_{i}\right) ⋅ {s}_{i} - m - {e}_{in} \\ = {\sum }_{i = 1}^{kN} \left({s}_{i}-{μ}_{s}\right) ⋅ {U}_{i}\end{matrix}$ with the variance equal to: $kN ⋅ \frac{1}{12 {β}_{ks}^{2 {l}_{ks}}} ⋅ {σ}_{s}^{2} .$

The suggested change to the gadget decomposition is described in the algorithm below. Again, the noise variance due to the rounding operation is nearly halved thanks to the compensation terms for the various coefficients and this at negligible computational cost.

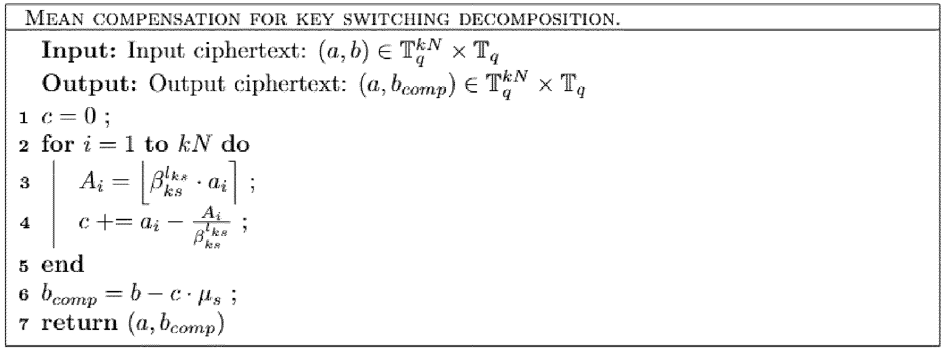

The idea of blind rotation is to decrypt a ciphertext (i.e., to calculate b - Σ aᵢsᵢ) in the encrypted domain. In each blind rotation, a ciphertext acc is rotated with aᵢsᵢ slots, written as accᵢ₋₁ · X^{ai·si}. Together with an initial rotation with -b slots, one ends up with acc₀ · X^{-b + Σai·si}, which can be used to calculate the end result of a bootstrap.

In more detail, during a blind rotation, one computes accᵢ = (accᵢ₋₁ · X^{ai} - accᵢ₋₁) 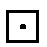 BSKᵢ + accᵢ₋₁ = accᵢ₋₁ · X^{ai · si}, where 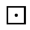 BSKᵢ indicates a multiplication with BSKᵢ, which is an encryption of sᵢ. This multiplication process starts by computing the gadget decomposition of the polynomial (accᵢ₋₁ ·X^{ai} - accᵢ₋₁): $\left({A}_{i}, B\right) : = \left({acc}_{i - 1}⋅{X}^{{a}_{i}}-{acc}_{i - 1}\right)$ ${A}_{i} = {A}_{i}^{\left(1\right)} ⋅ \frac{1}{{β}_{br}} + {A}_{i}^{\left(2\right)} ⋅ \frac{1}{{β}_{br}^{2}} + ⋯ + {A}_{i}^{\left({l}_{br}\right)} ⋅ \frac{1}{{β}_{br}^{{l}_{br}}} + {U}_{i}$ $B = {B}^{\left(1\right)} ⋅ \frac{1}{{β}_{br}} + {B}^{\left(2\right)} ⋅ \frac{1}{{β}_{br}^{2}} + ⋯ + {B}^{\left({l}_{br}\right)} ⋅ \frac{1}{{β}_{br}^{{l}_{br}}} + {U}_{B}$ where every coefficient, h, of every polynomial of rounding errors, Ui, is distributed as: ${A}_{i}^{\left(j\right)} \left[h\right] follows U \left(〚-\frac{{β}_{br}}{2},\frac{{β}_{br}}{2}〚\right)$ ${B}^{\left(j\right)} \left[h\right] follows U \left(〚-\frac{{β}_{br}}{2},\frac{{β}_{br}}{2}〚\right)$ ${U}_{i} \left[h\right] follows U \left(〚-\frac{1}{2 {β}_{br}^{{l}_{br}}},\frac{1}{2 {β}_{br}^{{l}_{br}}}〚\right) .$

Each of the Uᵢ is a polynomial that represents a rounding error that introduces extra noise on the output. This noise term E_{br} can be found when decrypting the recomposed GLWE ciphertext after the rounding operation: $\begin{matrix}{E}_{br} = B - {U}_{B} - {\sum }_{i = 1}^{k} \left({A}_{i}-{U}_{i}\right) ⋅ {S}_{i} - M - {E}_{in} \\ = {\sum }_{i = 1}^{k} {S}_{i} ⋅ {U}_{i} - {U}_{B}\end{matrix}$ with the variance on each of the elements of the polynomial equal to: $\frac{1}{12 {β}_{br}^{2 {l}_{br}}} ⋅ \left(kN⋅\left({σ}_{s}^{2}+{μ}_{s}^{2}\right)+1\right) .$

Once again, B is adjusted based on rounding errors in the gadget decomposition of Aᵢ. However, note that in this case, all elements B, Aᵢ and Uᵢ are polynomials and no longer coefficients. This means one has to calculate B̂ as B̂ = B - µₛI^{N} · Σ Uᵢ, with I_{N} the polynomial with all coefficients set to one, i.e., 1 + X + X² + · · · + X^{N-1}. Now, decrypting indicates that the noise introduced equals: $\begin{matrix}{E}_{br} = \hat{B} - {U}_{\hat{B}} - {\sum }_{i = 1}^{k} \left({A}_{i}-{U}_{i}\right) ⋅ {S}_{i} - M - {E}_{in} \\ = B - {U}_{\hat{B}} - {μ}_{s} {I}^{N} ⋅ {\sum }_{i = 1}^{k} {U}_{i} - {\sum }_{i = 1}^{k} \left({A}_{i}-{U}_{i}\right) ⋅ {S}_{i} - M - {E}_{in} \\ = {\sum }_{i = 1}^{k} \left({S}_{i}-{μ}_{s}{I}^{N}\right) ⋅ {U}_{i} - {U}_{\hat{B}}\end{matrix}$ with the variance on each of the elements of the polynomial equal to: $\frac{1}{12 {β}_{br}^{2 {l}_{br}}} ⋅ \left(kN⋅{σ}_{s}^{2}+1\right) .$

Note that calculating the corrected body polynomial B̂ uses the result of the multiplication of the polynomials µₛI^{N} and Σ Uᵢ. Naively, this is computed using a schoolbook multiplication or using a Fast Fourier Transformation (FFT) of size N. However, due to the structure of the µₛI^{N} polynomial, this product can be calculated more efficiently. Specifically, note that ${μ}_{s} {I}^{N} ⋅ {\sum }_{i = i}^{k} {U}_{i} = \left[\begin{matrix}{μ}_{s} & - {μ}_{s} & - {μ}_{s} & … & - {μ}_{s} \\ {μ}_{s} & {μ}_{s} & - {μ}_{s} & … & - {μ}_{s} \\ {μ}_{s} & {μ}_{s} & {μ}_{s} & … & - {μ}_{s} \\ … & … & … & … & … \\ {μ}_{s} & {μ}_{s} & {μ}_{s} & … & {μ}_{s}\end{matrix}\right] ⋅ {\sum }_{i = i}^{k} {U}_{i} .$ This allows calculating the polynomial multiplication with fewer additions and subtractions. The full suggested approach is described below.

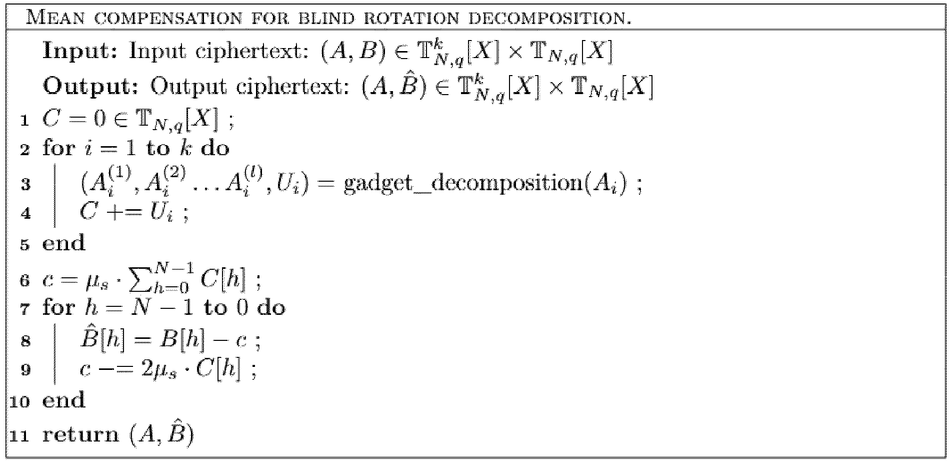

While the examples above are given in the context of the bootstrap operation, it is easy to use the same techniques in other operations. The gadget decomposition (GD) for example, can also be used in multiplication operations, for example in the multiplication between a GLWE and a GGSW ciphertext. In this context one would perform a gadget decomposition on the GLWE ciphertext followed with a multiplication with the GGSW ciphertext, i.e., GD(ct_{GLWE}) 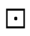 ct_{GGSW}. In this context the methods explained above are also applicable. Similarly, modulus switching is also a standard operation in Homomorphic Encryption calculations. In general, the method of this invention is applicable for any operation that results in an approximation error.

In the examples above the approximation error of the coefficients of the mask a are computed and compensated in the body b before the rounding of the body. It is possible to postpone the compensation in b to a future version of the ciphertext, for example after the rounding or even after further operations are performed, as long as these operations are linear. For example, when working in highly parallelized environments, one might do the rounding on all elements at the same time, and only after the rounding, perform the compensation in the already rounded body b.

The mean can also be compensated in variants of the approaches presented above. For example, one could add the b term and the mean compensation in different rotation steps, or adapt the initial LUT F to take into account the extra rotation due to the compensation before the blind rotations are performed. The main idea for all these techniques remains to eliminate the mean of the distribution of the secret in the noise equation by adding a compensation term computed based on this distribution of the secret and on the approximation error or the original full precision coefficients.

Bootstrap key unrolling is a technique first presented in the paper 'Faster Bootstrapping with Multiple Addends' (T.Zhou et al, IEEE Access, 6:49868-49876, 2018) that executes multiple classical blind rotations with one external product. For example, instead of sequentially computing: ${acc}_{i} = \left({acc}_{i - 1}⋅{X}^{\left⌊2N-{a}_{i}\right⌋}-{acc}_{i - 1}\right) ⊡ {BKS}_{i} + {acc}_{i - 1}$ ${acc}_{i + 1} = \left({acc}_{i}⋅{X}^{\left⌊2N⋅{a}_{i + 1}\right⌋}-{acc}_{i}\right) ⊡ {BKS}_{i + 1} + {acc}_{i}$ One would compute ${acc}_{i + 1} = {acc}_{i - 1} ⊡ \left[\begin{matrix}1 + \left({X}^{\left⌊2N⋅{a}_{i}\right⌋ + \left⌊2N⋅{a}_{i + 1}\right⌋}-1\right) ⋅ {BKS}_{i , 1} + \\ \left({X}^{\left⌊2N⋅{a}_{i}\right⌋}-1\right) ⋅ {BKS}_{i , 2} + \left({X}^{\left⌊2N⋅{a}_{i}\right⌋}-1\right) {BKS}_{i , 3}\end{matrix}\right]$ where BSK_{i,1}, BSK_{i,2}, and BSK_{i,3} are respectively encryptions of (sᵢ · sᵢ₊₁), sᵢ · (1 - sᵢ₊₁), and (1 - sᵢ) · sᵢ₊₁.

In this example an unrolling factor of two is employed as two blind rotates are grouped into one external product. This halves the number of external products to be calculated but increases the number of bootstrapping keys being used by 50%.

Similar formulas to unroll with a larger factor may be found to reduce the number of external products further, but they increase the number of bootstrapping keys exponentially. Therefore, the literature typically indicates to keep the unrolling factor limited to two or three.

One of the advantages of bootstrap key unrolling is that one can postpone modulus switching, and compress the term $\left⌊2N⋅{a}_{i}\right⌋ + \left⌊2N⋅{a}_{i + 1}\right⌋$ in one time $\left⌊2N⋅{a}_{i}+2N⋅{a}_{i + 1}\right⌋$. This halves the noise of this term, which is propagated with probability 1/4 (i.e, if both sᵢ and sᵢ₊₁ are equal to 1). As such, it reduces the noise of the modulus switching operation, and for a uniformly distributed sᵢ E {0, 1}, this is only a 25% noise reduction. The parameter T is defined as the difference between the postponed rounding and the traditional approach. That is ${T}_{i} = \left⌊2N⋅{a}_{i}+2N⋅{a}_{i + 1}\right⌋ - \left(\left⌊2N⋅{a}_{i}\right⌋+\left⌊2N⋅{a}_{i + 1}\right⌋\right)$, or similarly: ${T}_{i} = \left\{\begin{matrix}1 & if {u}_{i} + {u}_{i + 1} > 1 / 2 \\ - 1 & if {u}_{i} + {u}_{i + 1} < - 1 / 2 \\ 0 & otherwise .\end{matrix}\right.$

A second option is to keep the term $\left⌊2N⋅{a}_{i}\right⌋ + \left⌊2N⋅{a}_{i + 1}\right⌋$, but carry out the modulus switch mean compensation as described above, which still leads to a 50% noise reduction in case of a uniform Boolean secret distribution. A third option is to utilize both compensation techniques by performing modulus switch mean compensation and calculating $\left⌊2N⋅{a}_{i}+2N⋅{a}_{i + 1}\right⌋$. However, when doing this naively, it can be calculated that this does not outperform the option wherein the term $\left[2N\right.$ $\left.⋅{a}_{i}\right] + \left⌊2N⋅{a}_{i + 1}\right⌋$ is kept as described above and is as such less appealing.

An improvement is proposed of this third hybrid option. Instead of computing 6 = b - Σ (c₂ᵢ · u₂ᵢ + c₂ᵢ₊₁ · u₂ᵢ₊₁) with c₂ᵢ = c₂ᵢ₊₁ = µₛ as described above, one can introduce an extra term c_{T} so that the compensation becomes b̂ = b - Σ (cᵢ · uᵢ + cᵢ₊₁ · uᵢ₊₁ - c_{T} · Tᵢ), with: ${T}_{i} = \left\{\begin{matrix}1 & if {u}_{i} + {u}_{i + 1} > τ \\ - 1 & if {u}_{i} + {u}_{i + 1} < - τ \\ 0 & otherwise .\end{matrix}\right.$

One can perform a search for optimal values of the parameters c₂ᵢ, c₂ᵢ₊₁, c_{T} and τ (as described below). For example, for a uniformly Boolean distribution of s, the following parameters are obtained: ${c}_{i} = {c}_{i + 1} = 1 / 2 \left(={μ}_{s}\right)$ ${c}_{T} = 1 / 4 \left(={μ}_{s}^{2}\right)$ $τ = 3 / 4 .$ These values align with expectations, as they minimize the mean component in the secret terms. That is, these are the terms that make the error term: $e = {u}_{i} ⋅ \left({s}_{i}-{μ}_{s}\right) + {u}_{i + 1} ⋅ \left({s}_{i + 1}-{μ}_{s}\right) - T ⋅ \left({s}_{i}⋅{s}_{i + 1}-{μ}_{s}^{2}\right) .$ The optimization can be performed by calculating the variance of the error as: 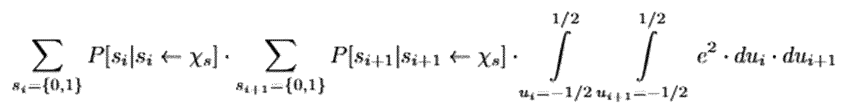 and deriving to find the optimal values for c₂ᵢ, c_{2i+1,} c_{T} and τ.

For these parameters, the hybrid solution manages a 52% reduction in the modulus switch noise, thus outperforming all three options described above. This technique can be extended to other distributions of s or for higher unrolling factors in the bootstrap key unrolling by solving the optimization problem above for the relevant instance.

The double lookup through manyLUT suggested in the paper 'Improved programmable bootstrapping with larger precision and efficient arithmetic circuits for TFHE' (I. Chillotti et al, Advances in Cryptology - ASIACRYPT 2021, pp.670-699, Cham, 2021, Springer International Publishing) grants another opportunity to improve the efficiency of the bootstrap cycle. This double lookup allows computing two functions on one input ciphertext at the cost of only one bootstrap. This is useful compared to, for example, certain integer multiplication implementations which compute nearly all bootstraps twice to evaluate two distinct functions. The downside of this technique is a twofold increase in the standard deviation of the modulus switching noise eₘₛ, which accounts for a fourfold increase in its variance.

The idea behind manyLUT is that two or more functions are combined into one LUT that is used during the bootstrap. More specifically, for two functions, one would intertwine the two function as:

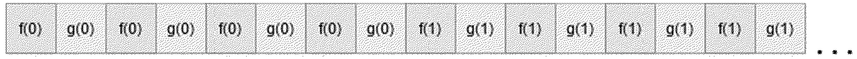

and perform the modulus switching as $2 ⋅ \left⌊N⋅a\right⌋$ (instead of $\left⌊2N⋅a\right⌋$ in standard modulus switching) and similar for the b term. This comes down to one extra bit being rounded away and therefore the doubling in the standard deviation or quadrupling of the variance of the error. This has as effect that one always ends up at an even slot in the lookup table holding the function evaluation of the first function, which gives the possibility to put a second function evaluation at each uneven slot. In this case, one can easily extract both function evaluations and thus the result of both functions by doing a standard extraction and an extraction proceeded by an extra rotation by one slot.

The above technique doubles the error standard deviation of the rounding operation. The technique according to the invention reduces this error growth. To achieve this, one can combine the double lookup with the traditional low-error modulus switching $\left⌊2N⋅a\right⌋$, by introducing a compensation rotation to ensure the resulting slot is even. The idea is that the modulus switch and blind rotations are computed with high precision (i.e., $\left⌊2N⋅a\right⌋$), thus reducing the noise introduced compared to the traditional manyLUT approach. This results in a rotation that can be both even and uneven. Then, an extra rotation is introduced that rotates one extra slot if the result was uneven, making sure the end result is always at an even slot and paving the way for encoding a second function in the uneven slots.

More specifically, after the full blind rotation procedure, one computes: $acc ⊡ \left(\left(X-1\right)⋅{CK}_{α}+1\right) ,$ where α = a₀ mod 2 | a₁ mod 2 | ... | aₙ₋₁ mod 2, and CK_{α} (compensation key) is a GGSW encryption of Σ aᵢ sᵢ mod 2. That is, α encodes the least significant bits of all coefficients of a, or in other words encodes which coefficients of a are uneven. The CK_{α} then, based on the knowledge of the even/unevenness of the coefficients of a as encoded in α, encrypts whether an additional rotation by one slot is needed to make the final rotation state even. Note that this value needs to be encrypted as it depends on the value of the secret s.

The downside of this technique is twofold: an extra blind rotation is required, which slightly increases the computation time and noise, and one needs to precompute CK_{α} for every possible value of α, which requires an impractical 2ⁿ CK_{α} values to be precomputed and stored. The first downside, doing an extra rotation, only has a marginal effect, as one increases the number of blind rotations from n to n+1, for typical values of n in range 512 to 1024 . The second downside, the large number of BSK_{α} values does impede practical use of this technique.

To reduce the number of CK_{α} values to be precomputed, the a vector can be split into multiple blocks of t coefficients. Then, one can do the above procedure for each block separately, making sure that the result of each individual block is even, thus making the full result even. That is, for each block j one computes: $acc ⊡ \left(\left(X-1\right)⋅{CK}_{αj}+1\right) ,$ where αⱼ = aⱼₜ mod 2 | aⱼₜ₊₁ mod 2 | ... | aⱼₜ₊ₜ₋₁ mod 2, and CK_{αj} is a GGSW encryption of Σ aᵢ sᵢ mod 2 where the sum is taken over all coefficients in the j^{th} block. This technique reduces the number of CK_{αj} that need to be precomputed to $\left⌈n/t\right⌉ ⋅ {2}^{t}$, but increases the extra number of blind rotations to $\left⌈n/t\right⌉$. In practice, one typically has to reduce the blocks to be size t=2 to 10, to limit the number of precomputed and stored CK_{αj}, although it is entirely possible to use higher and more aggressive values of t to reduce the noise and computation time.

This approach can easily be generalised to compute more than two function in one lookup. For example, if one wants to compute four functions in one lookup, one needs to make sure the end result always is a multiple of four. This can be done by the traditional approach of computing $4 ⋅ \left⌊N⋅a/2\right⌋$ (instead of $\left⌊2N⋅a\right⌋$ in standard modulus switching), or by using a generalisation of the proposed approach. In this case one uses the values $\left⌊2N⋅a\right⌋$ to perform the blind rotation, followed by a compensation to make sure the end result is a multiple of 4. This can be done by computing: $acc ⊡ \left(\left(X-1\right)⋅{CK}_{α}+1\right) ,$ where α = a₀ mod 4 | a₁ mod 4 | ... | aₙ₋₁ mod 4, and CK_{α} is a GGSW encryption of - Σ aᵢ sᵢ mod 4. Similar as before one can break this compensation into multiple blocks.

Another generalisation is that one can choose the blocks to have different sizes. That is, it is not necessary for all blocks to have the same size, as long as all coefficients have been compensated in the end. Another option is to use $\left⌊2N⋅{a}_{i}\right⌋$ for some coefficients and $2 ⋅ \left⌊N⋅{a}_{i}\right⌋$ for other coefficients, in which case only the $\left⌊2N⋅{a}_{i}\right⌋$ coefficients need to be compensated for evenness.

It is possible to combine the compensation technique based on a distribution used to generate the secret, e.g. on the mean of the distribution, with the compensation rotation technique for multi-lookups as described above. In this case one rounds the ciphertext as needed (e.g., $2 ⋅ \left⌊N⋅a\right⌋$ or $4 ⋅ \left⌊N⋅a/2\right⌋$ in the example above), and then compensates the approximation error in the b term as described previously. In a second step one performs the rotation compensation, where the blind rotations are performed and an additional rotation with a CK_{αj} term ensures that the end result is a multiple of the required integer.

The reductions of the modulus switching, key switching decomposition, and bootstrap decomposition noise lead to a reduced chance of decryption errors. However, the main barrier towards deploying TFHE at a large scale resides in the computation time. By adjusting the chosen parameters, one can exploit the reduced noise to decrease computation time for an equal security level and fault chance. The exact gains will depend on the chosen security level, fault chance, and plaintext modulus. This can be done by writing or adapting any existing program that looks for optimal FHE parameters to account for our new decryption failure costs.

One way to find optimal parameters is to loop over possible parameters in nested loops (for example the polynomial size, LWE size, gadget decomposition parameters, security error variances), and select the most efficient parameter set that fulfils the security and overall error probability requirements. To speed up this process one could do early stopping in loops where the next parameters do not fulfil the constraints or where they will lead to less efficient parameter choices.

While the invention has been illustrated and described in detail in the drawings and foregoing description, such illustration and description are to be considered illustrative or exemplary and not restrictive. The foregoing description details certain embodiments of the invention. It will be appreciated, however, that no matter how detailed the foregoing appears in text, the invention may be practiced in many ways. The invention is not limited to the disclosed embodiments.

Other variations to the disclosed embodiments can be understood and effected by those skilled in the art in practicing the claimed invention, from a study of the drawings, the disclosure and the appended claims. In the claims, the word "comprising" does not exclude other elements or steps, and the indefinite article "a" or "an" does not exclude a plurality. A single processor or other unit may fulfil the functions of several items recited in the claims. The mere fact that certain measures are recited in mutually different dependent claims does not indicate that a combination of these measures cannot be used to advantage. A computer program may be stored/distributed on a suitable medium, such as an optical storage medium or a solid-state medium supplied together with or as part of other hardware, but may also be distributed in other forms, such as via the Internet or other wired or wireless telecommunication systems. Any reference signs in the claims should not be construed as limiting the scope.

## Claims

1. Method for reducing noise generated in a ciphertext used in a homomorphic encryption scheme, said ciphertext comprising a mask and a body and encrypting a message using a secret, said mask, said body, and said secret each being represented by one or more elements, the method comprising:
- performing one or more operations on said ciphertext, thereby introducing an approximation error for said one or more elements of at least said mask of said ciphertext,
- determining for one or more of said elements and/or said approximation errors a compensation based on said secret or a distribution used to generate said secret,
- reducing said noise by applying said compensation to said one or more elements.

2. Method as in claim 1, where said compensation is calculated as a function of one or more of said elements and/or said approximation errors.

3. Method as in claim 1 or 2, where said approximation errors for said one or more elements are combined into an approximation error term, and a function of said approximation error term is added to or subtracted from said ciphertext or a future ciphertext derived from said ciphertext.

4. Method as in claim 3, where said approximation error term is multiplied with the mean of said secret, and the multiplication result is added to or subtracted from said ciphertext or a future ciphertext derived from said ciphertext.

5. Method as in any of the previous claims, where said approximation error is due to a modulus switching operation.

6. Method as in any of the previous claims, where said approximation error is due to a gadget decomposition operation.

7. Method as in any of the previous claims, where said approximation error is due to a blind rotation operation.

8. Method as in any of the previous claims, wherein said one or more operations are part of a bootstrapping procedure.

9. Method as in any of the previous claims, comprising performing a bootstrap key unrolling technique, wherein a plurality of said elements is combined and said combined elements are approximated, and wherein said compensation also depends on whether said approximations of said combined elements deviate from respective combinations of approximations of the individual elements making up said combined elements.

10. Method as in any of the previous claims, where said compensation comprises performing one or more additional blind rotations based on an encryption of a function of multiple elements of said secret and where said one or more additional blind rotations compensate the total rotated slots to equal a multiple of a targeted integer, allowing up to said integer number of function evaluations to be performed.

11. Method as in any of the previous claims, wherein said reduced noise is exploited to adapt at least one parameter of said homomorphic encryption scheme.
